# FASCICULE DE BREVET EUROPEEN

(11) **EP 1 217 605 B1**
(45) Date de publication et mention de la délivrance du brevet: **25.08.2004**
(21) Numéro de dépôt: 01450020.1
(22) Date de dépôt: 20.12.2001
(51) Int. Cl.: G10K 11/168, F02C 7/045

(54) **Procédé de fabrication d'un panneau à couche d'amortissement acoustique protégée et panneau acoustique ainsi obtenu**
Herstellungsverfahren für eine Platte mit geschützter schalldämmender Schicht und auf dieser Basis hergestellte Platte
Method of manufacturing a panel with a protected acoustic sound damping layer and acoustic panel thereby created

(30) Priorité: 21.12.2000 FR 0016843
(43) Date de publication de la demande: 26.06.2002
(73) Titulaire: AIRBUS FRANCE (Société par Actions Simplifiée), 31060 Toulouse (FR)
(72) Inventeur: Buge, Michel, 44230 Saint Sebastien sur Loire (FR); Porte, Alain, 31770 Colomiers (FR); Poignonec, Jean-Marc, 44360 Saint Etienne de Montluc (FR)
(74) Mandataire: Thébault, Jean-Louis

(56) Documents cités:
- WO-A-92/20523
- FR-A- 2 767 411
- GB-A- 1 490 923
- US-A- 4 038 118
- US-A- 5 594 216

## Description

La présente invention a trait aux panneaux d'atténuation acoustique et plus particulièrement ceux tapissant les canaux annulaires de soufflante formés dans les nacelles de turbomoteurs d'aéronefs notamment.

De tels panneaux forment l'enveloppe, côté canal de soufflante, de la nacelle, en arrière de la lèvre d'entrée d'air et présentent une structure propre à atténuer les bruits produits par la partie centrale du moteur enveloppée par la nacelle et notamment ceux produits par la soufflante.

Dans la pratique, ces panneaux intègrent une âme alvéolaire, telle qu'une structure en nid d'abeilles flanquée, côté canal de soufflante, d'une couche d'amortissement acoustique et, du côté opposé, d'un réflecteur arrière.

La couche d'amortissement acoustique est une structure poreuse à rôle dissipatif, c'est-à-dire transformant partiellement l'énergie acoustique de l'onde sonore la traversant en chaleur.

Cette structure poreuse peut être, par exemple, un tissu métallique ou un tissu de fibres de carbone dont le tissage permet de remplir sa fonction dissipatrice.

Ces panneaux acoustiques devant également avoir des propriétés structurales suffisantes pour notamment recevoir et transférer les efforts aérodynamiques, inertiels et ceux liés à la maintenance de la nacelle, vers les liaisons structurales nacelle / moteur, il est nécessaire de conférer à la couche d'amortissement acoustique des propriétés structurales.

A cette fin, on peut, comme illustré par le brevet GB 2 130 963, réaliser une couche d'amortissement acoustique à deux composants, à savoir une couche structurale, côté nid d'abeilles et une couche poreuse en surface, ou bien utiliser comme couche d'amortissement un tissu combinant à la fois la fonction acoustique et la fonction structurale en choisissant un diamètre des fils du tissu donnant à ce dernier une bonne résistance aux efforts couplée à une bon amortissement acoustique.

Pour la fabrication de tels panneaux, on connaît le procédé consistant à réaliser l'ensemble annulaire formant la paroi du canal de soufflante en deux demi-panneaux éclissés comprenant, pour chaque demi-panneau, les étapes suivantes :
- prédéformation d'une nappe de structure poreuse sur une forme identique à un demi-panneau à l'aide de mors étirant le matériau poreux jusqu'à sa limite élastique,
- mesure acoustique de la forme ainsi réalisée afin de qualifier la valeur moyenne de porosité acoustique,
- adaptation à la valeur moyenne ci-dessus de l'écart de bobinage des fils de carbone destinés à être déposés sur la couche poreuse pour constituer une couche structurale,
- mise en place sur un moule approprié de la forme pré-déformée,
- puis réalisation du demi-panneau par des techniques connues de bobinage desdits fils de carbone, et de mise en place de l'âme alvéolaire et du réflecteur arrière.

Ce procédé présente des inconvénients.

En effet, la forme à réaliser n'étant pas de circonvolution, il existe dans la nappe déformée des zones non homogènes, c'est-à-dire des zones détendues et des zones contraintes, qui dégradent la qualité acoustique générale de la structure poreuse. L'écart de bobinage des fils de carbone étant adapté à la valeur moyenne de porosité acoustique de la structure, les zones non homogènes introduisent des variations dans l'atténuation acoustique du bruit généré par le moteur.

Par ailleurs, la présence des éclisses de liaison des deux demi-panneaux introduit deux zones de réfraction acoustique dans le panneau acoustique final, préjudiciable à la qualité d'atténuation des bruits générés par le moteur.

Pour remédier à ces inconvénients, on peut, comme enseigné par le brevet FR 2 767 411 délivré au nom de la Demanderesse, mettre en place la couche d'amortissement acoustique par banderolage à partir d'un matériau poreux se présentant sous forme de bande.

Cette manière d'opérer non seulement permet d'éviter les zones non homogènes au point de vue acoustique de la couche poreuse rencontrée, comme indiqué plus haut, dans la technique habituelle de fabrication en deux demi-panneaux, mais également d'éliminer la nécessité de l'éclissage, le banderolage de la couche poreuse pouvant s'appliquer à la mise en place des autres couches, à savoir la couche structurale, l'âme centrale alvéolaire, le réflecteur arrière, en sorte de réaliser un panneau acoustique complet en un seul morceau, sans éclisse.

L'absence d'éclisse permet d'augmenter la surface efficace acoustique du panneau, de diminuer sa masse et de réduire les temps et coûts de fabrication.

Toutefois, un panneau acoustique d'une telle structure met les bandes constitutives de la couche poreuse en contact direct avec l'écoulement du fluide aérodynamique dans le canal de soufflante. Lorsque ces bandes sont réalisées en tissu métallique, elles sont facilement pelables sur leur bord en contact avec l'écoulement aérodynamique, d'autant plus qu'elles sont disposées sensiblement perpendiculairement à la direction dudit écoulement.

Ainsi, non seulement les qualités acoustiques du panneau sont dégradées, mais de plus, le panneau lui-même se dégrade et doit être changé, ce qui implique des coûts de maintenance et d'immobilisation de l'aéronef.

La présente invention a pour but de remédier à ces inconvénients en perfectionnant la technique de banderolage décrite dans FR 2 767 411.

A cet effet, l'invention a pour objet un procédé de fabrication d'un panneau à couche d'amortissement acoustique protégée, selon la revendication 1, comprenant au moins une âme centrale à structure alvéolaire flanquée, d'une part, d'une couche d'amortissement acoustique poreuse et, d'autre part, d'un réflecteur acoustique total, dans lequel au moins ladite couche poreuse est mise en place par banderolage ou drapage, ladite couche poreuse étant constituée de bandes parallèles, caractérisé en ce qu'on positionne les bords des bandes de la couche poreuse en regard d'une bande déposée par banderolage ou drapage et contenant un matériau thermoplastique, thermodurcissable ou thermofusible apte, par chauffage ultérieur, à assurer la solidarisation des bordures desdites bandes avec la bande adjacente.

Suivant un mode de mise en oeuvre destiné plus particulièrement à la réalisation d'un panneau d'un seul bloc, sans éclisse, de forme générale annulaire, la couche poreuse et ladite bande contenant un matériau thermoplastique, thermodurcissable ou thermofusible, sont banderolées ou drapées sur un moule conforme au profil du panneau à obtenir, la structure alvéolaire et le réflecteur total étant ensuite mis en place également par banderolage ou drapage.

D'autres panneaux, concaves ou convexes, non-annulaires peuvent être réalisés conformément au procédé de l'invention et de préférence simultanément à partir d'un même moule sur lequel sont banderolées ou drapés les diverses couches constitutives des panneaux.

Selon l'ordre de dépose des différentes couches sur le moule, on obtiendra un panneau avec une couche poreuse concave ou convexe.

On peut ainsi réaliser par exemple des panneaux constituant des portes d'inverseur de poussée ou des panneaux à éclisses pour nacelle.

Suivant un mode de mise en oeuvre, ladite bande contenant un matériau thermoplastique, thermodurcissable ou thermofusible est constituée de fils pré-imprégnés d'une résine thermodurcissable ou thermoplastique, ladite bande constituant une couche structurale associée à la couche acoustique poreuse et chargée, ce qui est le cas de l'application du procédé de l'invention à la réalisation de panneaux acoustiques d'entrée d'air de nacelle, de transférer les efforts dynamiques et inertiels ainsi que ceux liés à la maintenance de la nacelle, vers les liaisons structurales.

Par fils, on entend un ensemble de section carrée, ronde ou rectangulaire, de fils, de bandes de fils, de mèches, de tresses ou de brins de fils, de différente nature, par exemple du carbone, du verre ou du "Kevlar".

Ces fils au sens large défini ci-dessus sont déposés par exemple par banderolage suivant diverses modalités et sont utilisés essentiellement dans le cas d'une dépose non jointive des enroulements de la bande d'amortissement acoustique poreuse, en recouvrement des intervalles entre enroulements.

Suivant une première modalité, lesdits fils sont banderolés sur la couche poreuse, en sorte d'être pris en sandwich entre cette dernière et l'âme alvéolaire, déposée ensuite, par exemple par banderolage d'une structure en nid d'abeilles en forme de bande.

Les enroulements des fils sont à distance les uns des autres et uniquement en regard et en chevauchement des intervalles entres les bandes de la couche poreuse.

Suivant une autre modalité, lesdits fils sont banderolés en premier sur le moule de façon à se trouver au moins en regard et en chevauchement des intervalles entre les bandes de la couche poreuse qui est banderolée en deuxième temps et qui va donc se trouver en sandwich entre la couche structurale formée par les fils et la structure alvéolaire, identique par exemple au cas précédent.

Là également, les fils sont à distance les uns des autres et ne font pas obstacle à l'accomplissement par la couche poreuse sous-jacente de sa fonction dissipatrice.

Suivant encore une autre modalité qui est un compromis entre les deux précédentes, lesdits fils sont placés de part et d'autre de la couche poreuse mais toujours en sorte de recouvrir au moins les intervalles entre bandes de ladite couche poreuse.

Suivant un second mode de mise en oeuvre, ladite bande contenant un matériau thermoplastique, thermodurcissable ou thermofusible est une bande de tôle perforée revêtue d'un film de colle et utilisée par exemple avec une couche poreuse constituée comme dans l'exemple du premier mode de mise en oeuvre.

Ces bandes de tôle perforées sont déposées par banderolage suivant diverses modalités.

Suivant une première modalité, les bandes de tôle perforée ont une largeur égale ou inférieure à celle des bandes de la couche poreuse et sont placées en premier sur le moule avec un intervalle entre deux bandes successives, puis la couche poreuse est déposée en bandes disposées en regard desdits intervalles entre bandes de tôle.

Suivant une deuxième modalité, les bandes de tôle perforée ont une largeur sensiblement supérieure à celle des bandes de la couche poreuse et sont placées en premier sur le moule avec un léger recouvrement partiel entre bandes, puis la couche poreuse est déposée en sorte par exemple d'aligner chaque bande poreuse avec une bande de tôle, les enroulements de la couche poreuse n'étant pas jointifs.

Suivant une troisième modalité, les bandes de tôle perforée ont une largeur inférieure à celle des bandes de la couche poreuse, qui est déposée en premier sur le moule, de façon que les enroulements se recouvrent légèrement, puis les bandes de tôle sont placées en regard ou non des zones de chevauchement des bandes de la couche poreuse, ces bandes n'étant pas jointives.

Suivant un troisième mode de mise en oeuvre, ladite bande contenant un matériau thermoplastique, thermodurcissable ou thermofusible est constituée en fait par la couche poreuse elle-même qui est formée d'un tissu de fils pré-imprégnés d'une résine thermodurcissable ou thermoplastique. Les fils sont alors choisis avec un diamètre donnant au tissu ou analogue ainsi constitué une bonne résistance aux efforts couplée à un bon amortissement acoustique, la couche poreuse formant en même temps couche structurale.

Dans ce troisième mode de mise en oeuvre, la couche unique est banderolée sur le moule de façon à former des bandes ou enroulements à léger recouvrement mutuel.

Dans tous les exemples donnés ci-dessus, on obtient des panneaux dont la couche d'amortissement acoustique, qui est nécessairement tournée vers l'écoulement aérodynamique, est protégée au niveau des bordures des bandes constituant ladite couche, du fait que ces bordures sont fermement rendues solidaires d'une partie d'une sous-couche ou d'une sur-couche, selon les modalités d'application, par une liaison des constituants des couches par l'intermédiaire d'une résine ou d'une colle appropriée.

Tout pelage des bords des bandes formant la couche d'amortissement acoustique par l'écoulement aérodynamique est ainsi empêché et les propriétés mécaniques ainsi que la tenue dans le temps des panneaux sont substantiellement renforcées.

L'invention a également et bien entendu pour objet les panneaux d'atténuation acoustique obtenus conformément au procédé ci-dessus, quel que soit le contexte dans lequel ils sont posés.

On va maintenant décrire plus en détail les modes de réalisation évoqués ci-dessus en se référant aux dessins annexés sur lesquels :
- la figure 1 est une vue schématique en perspective d'un moteur d'aéronef ;
- la figure 2 est une coupe partielle axiale du nez du moteur de la figure 1 ;
- la figure 3 est une vue schématique en coupe partielle d'un panneau d'amortissement acoustique du type utilisé dans la nacelle du moteur de la figure 1, la coupe étant dans l'axe du canal de soufflante ;
- la figure 4 illustre schématiquement un premier mode de mise en oeuvre du procédé de l'invention ;
- la figure 5 est une coupe dans l'axe d'écoulement aérodynamique de la couche d'amortissement acoustique d'un panneau selon le mode de réalisation de la figure 4 ;
- la figure 6 illustre schématiquement un deuxième mode de mise en oeuvre du procédé ;
- la figure 7 est une coupe analogue à celle de la figure 5 et relative à la couche acoustique d'un panneau selon la figure 6 ;
- la figure 8 illustre schématiquement un troisième mode de mise en oeuvre du procédé ;
- la figure 9 est une coupe analogue à celle de la figure 5 et relative à la couche acoustique d'un panneau selon la figure 8 ;
- la figure 10 illustre schématiquement un quatrième mode de mise en oeuvre du procédé ;
- la figure 11 est une coupe analogue à celle de la figure 5 et relative à la couche acoustique d'un panneau selon la figure 10 ;
- la figure 12 illustre schématiquement un cinquième mode de mise en oeuvre du procédé ;
- la figure 13 est une coupe analogue à celle de la figure 5 et relative à la couche acoustique d'un panneau selon la figure 12 ;
- la figure 14 illustre schématiquement un sixième mode de mise en oeuvre du procédé ;
- la figure 15 est une coupe analogue à celle de la figure 5 et relative à la couche acoustique d'un panneau selon la figure 14 ;
- la figure 16 illustre schématiquement un septième mode de mise en oeuvre du procédé ;
- la figure 17 est une coupe analogue à celle de la figure 5 et relative à la couche acoustique d'un panneau selon la figure 16 ;
- la figure 18 illustre schématiquement un huitième mode de mise en oeuvre du procédé, et
- la figure 19 est une coupe analogue à celle de la figure 5 et relative à la couche acoustique d'un panneau selon la figure 18.

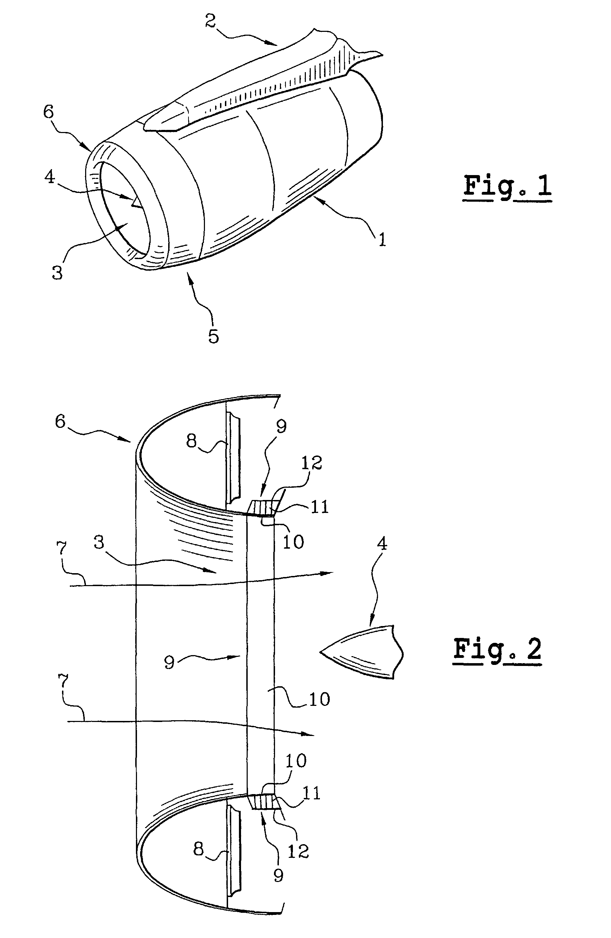

On a représenté en figure 1 un turboréacteur d'aéronef comprenant une nacelle 1 entourant coaxialement le moteur proprement dit et fixée par exemple à une aile (non représentée) de l'aéronef par l'intermédiaire d'un mât désigné d'une manière générale par la référence numérique 2.

La nacelle 1 a une section annulaire et définit entre elle et la partie centrale du moteur, un canal annulaire 3 dit de soufflante. On a représenté en 4 sur la figure le nez en forme d'ogive de la soufflante entraînée par le moteur et qui est placée à l'entrée du canal.

La partie avant 5 de la nacelle 1 constitue une structure d'entrée d'air qui a notamment pour fonction d'assurer l'écoulement aérodynamique de l'air, d'une part, vers le canal de soufflante 3 et, d'autre part, vers l'extérieur de la nacelle 1.

Comme on peut l'observer sur la figure 2 qui est une coupe axiale du nez de la nacelle 1, la structure d'entrée d'air se compose habituellement d'une lèvre d'entrée d'air 6 présentant en section la forme d'un U ouvert vers l'arrière. Cette lèvre forme l'enveloppe extérieure de la partie avant de la structure d'entrée d'air et assure le partage de l'air entre la partie 7 qui pénètre dans le canal de soufflante 3 et la partie qui s'écoule autour de la nacelle.

La structure d'entrée d'air comporte, outre la lèvre 6, un cadre de renfort avant 8 et un panneau d'atténuation acoustique 9.

Ce panneau 9 a une forme générale annulaire en définissant ledit canal de soufflante par sa face interne 10 en contact avec l'écoulement aérodynamique 7. Le panneau présente une structure propre à atténuer les bruits produits par la partie centrale du moteur et notamment par la soufflante.

Dans la pratique, cette structure est habituellement de type composite sandwich et comprend, outre une couche poreuse d'amortissement acoustique constituant la face 10, une âme alvéolaire 11 telle qu'un nid d'abeilles et, à l'opposé de la couche poreuse 10, une couche 12 formant réflecteur acoustique total.

La structure alvéolaire 11 peut être simple, c'est-à-dire à résonateur unique ou à âme alvéolaire multicouche ou bien multiple, c'est-à-dire à résonateurs superposés ou à âme alvéolaire formée de plusieurs couches superposées séparées ou non par des septums.

La procédé de l'invention s'applique notamment à la fabrication de panneaux d'atténuation acoustique tels que le panneau 9.

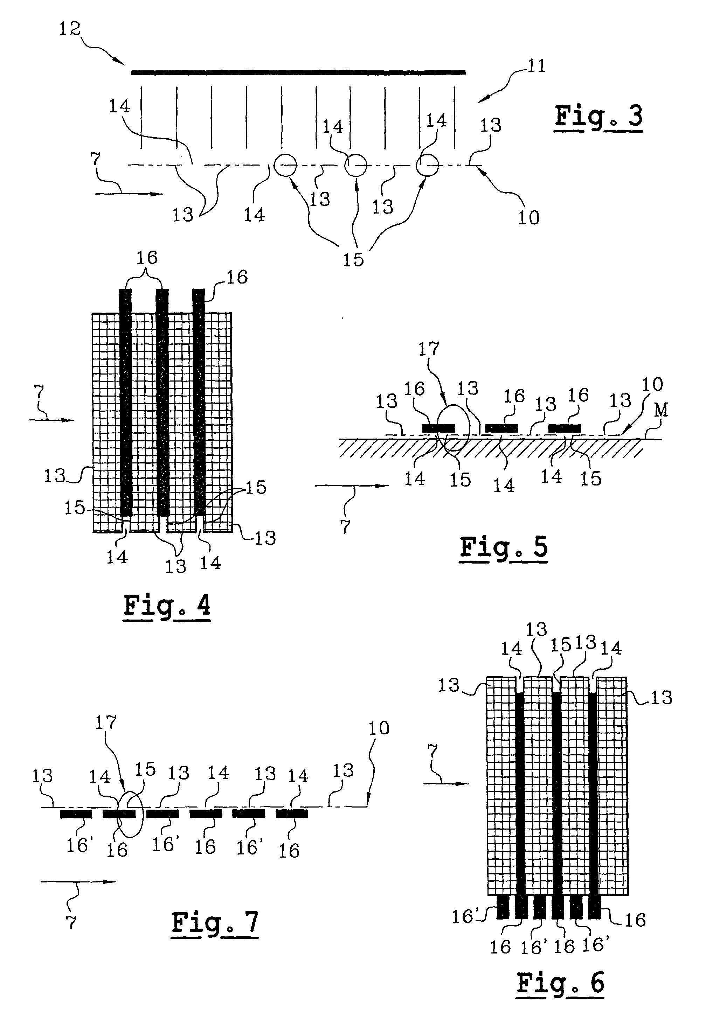

La figure 3 illustre la structure d'un panneau de ce type réalisé à partir des enseignements de FR 2 767 411 et constitué d'un panneau monobloc sans éclissage et de forme générale annulaire, comportant une âme centrale annulaire comprenant une âme centrale alvéolaire 11, par exemple un nid d'abeilles, flanqué, côté écoulement aérodynamique 7, d'une couche d'amortissement acoustique 10 déposée par banderolage ou drapage et, du côté opposé, d'une couche réflectrice arrière 12.

La couche résistive acoustique 10 provient par exemple d'une structure poreuse disponible en bande et qui est mise en place par enveloppement de manière hélicoïdale d'un moule (non représenté) aux formes et dimensions correspondant à celles du panneau 9 à réaliser.

La couche 10 est ainsi constituée d'enroulements ou bandes successives 13 séparées par un intervalle constant 14 et dont les bords notamment les bords d'attaque 15, c'est-à-dire ceux exposés en premier à l'écoulement aérodynamique 7, sont sensiblement perpendiculaires à l'axe de l'écoulement. Ceci les fragilise et risque d'entraîner le pelage des bandes 13 sous l'effet de l'écoulement 7.

L'invention vise précisément à remédier à ces inconvénients.

Conformément à un premier mode de mise en oeuvre du procédé de l'invention illustré par les figures 4 et 5, après mise en place par banderolage sur un moule symbolisé en M sur la figure 5 et de formes et dimensions appropriées, des bandes successives 13 espacées les unes des autres d'un intervalle 15, constituant la couche d'amortissement acoustique 10 du panneau, on met en place, également par banderolage, au droit des intervalles 14, des fils formant des bandes étroites 16 en recouvrement légèrement débordant desdits intervalles 14.

Ces bandes 16 recouvrent ainsi les bords en regard, dont les bords dits d'attaque 15, des bandes 13 de structure poreuse.

La couche d'amortissement 10 est par exemple un tissu formé d'un grillage inoxydable ou un tissu de fibres de carbone ou de verre pré-imprégnées d'une résine epoxy ou thermoplastique.

Par fils constituant les bandes 16, on entend d'une manière générale, un ensemble de section carrée, ronde ou rectangulaire de fils, de bandes de fils, de mèches, de tresses ou de brins de fils. Ces fils peuvent être de différentes natures, tels que des fils de carbone, de verre ou de "Kevlar", enduits d'un liant approprié.

Ces fils 16 sont capables de transférer les efforts dynamiques et inertiels, ainsi que ceux liés à la maintenance de la nacelle, vers les liaisons structurales nacelle / moteur.

L'âme alvéolaire (non représentée), telle qu'une structure en nid d'abeilles, est ensuite mise en place par dessus l'ensemble 10-16, par exemple par banderolage également, de même que la couche finale formant réflecteur (non représentée).

On obtient ainsi un panneau acoustique dont la face exposée à l'écoulement aérodynamique 7 est formée d'une couche à double fonction : amortissement acoustique par la couche poreuse 10 et renfort structural par les bandes de fils 16.

La fonction dissipatrice de la couche 10 peut s'exercer malgré la présence des fils 16 qui laissent néanmoins une part importante de la surface des bandes 13 libres, c'est-à-dire non recouvertes comme on peut l'observer sur la figure 5.

Il est à noter que dans la zone 17 d'une bordure de bande 13 sujette à décollement du fait de l'écoulement 7, tout arrachement est empêché par le fait que cette bordure se trouve solidarisée d'une partie de la sous-couche (16) en regard, grâce à la résine des fils et éventuellement du tissage de la couche 10, qui, par un traitement thermique ultérieur, va se diffuser et englober ladite bordure, lui assurant ainsi la protection désirée.

Lorsque tous les éléments du panneau sont mis en place, le panneau est démoulé par démontage, rétraction ou fusion du moule sur lequel ont été banderolés les divers éléments. La consolidation des bordures des bandes 13 par chauffage est effectuée de préférence avant démoulage.

Les figures 6 et 7 illustrent une variante de réalisation selon laquelle les fils 16 au sens large défini plus haut, sont mis en place de l'autre côté des bandes poreuses 13, c'est-à-dire côté écoulement aérodynamique 7, les fils 16 étant de ce fait banderolés les premiers sur le moule.

Les fils 16 sont placés comme dans la figure 5, à cheval sur les intervalles 14 entre bandes 13 et, de surcroît, des fils supplémentaires 16' sont placés sensiblement dans la zone centrale des bandes 13. Ceci renforce la fonction structurale des fils 16 tout en permettant néanmoins aux bandes 13, dans leurs parties non recouvertes par les fils 16, de jouer leur rôle dissipateur acoustique.

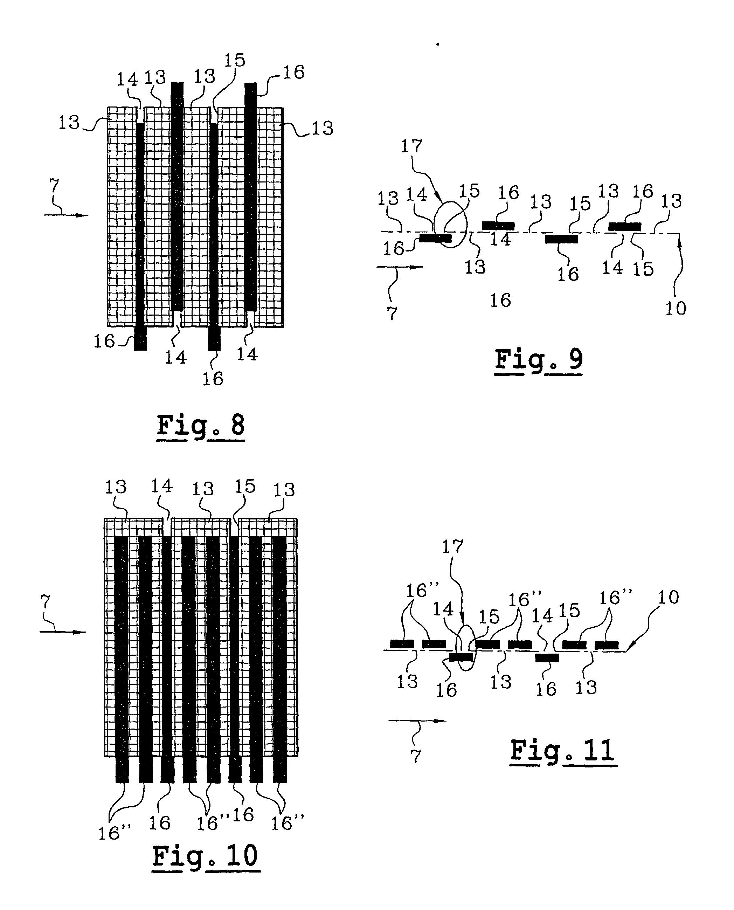

Les figures 8 et 9 illustrent une autre variante selon laquelle les fils 16 sont mis en place en alternance de part et d'autre de la couche 10.

Dans ces deux variantes, on obtient en 17 la même solidarisation entre les bordures des bandes 13 et la partie de la sous-couche ou sur-couche (16) en regard, grâce à la résine de la ou des couches en question, qui sera chauffée par la suite.

Dans le cas des figures 8 et 9, la double couche acoustique / structurale (10, 16) est réalisée en trois passes, à savoir un premier banderolage de fils 16, un banderolage de la couche 10, puis un second banderolage de fils 16.

Les figures 10 et 11 illustrent encore une autre variante selon laquelle les bandes 13 de la couche dissipatrice 10 sont sensiblement plus larges que les fils 16 des exemples précédents. Les fils 16 sont déposés de part et d'autre de la couche 10, mais le recouvrement des intervalles 14 est assuré par les seuls fils 16 déposés côté écoulement 7, les fils 16" de l'autre côté ne participant qu'au seul renfort structural en ne recouvrant qu'une partie des bandes 13.

La solidarisation en 17 au niveau des bordures des bandes 13 se fait comme dans le cas des figures 6, 7.

La mise en place des bandes 13, 16, 16" s'effectue suivant le même processus que pour les figures 8, 9.

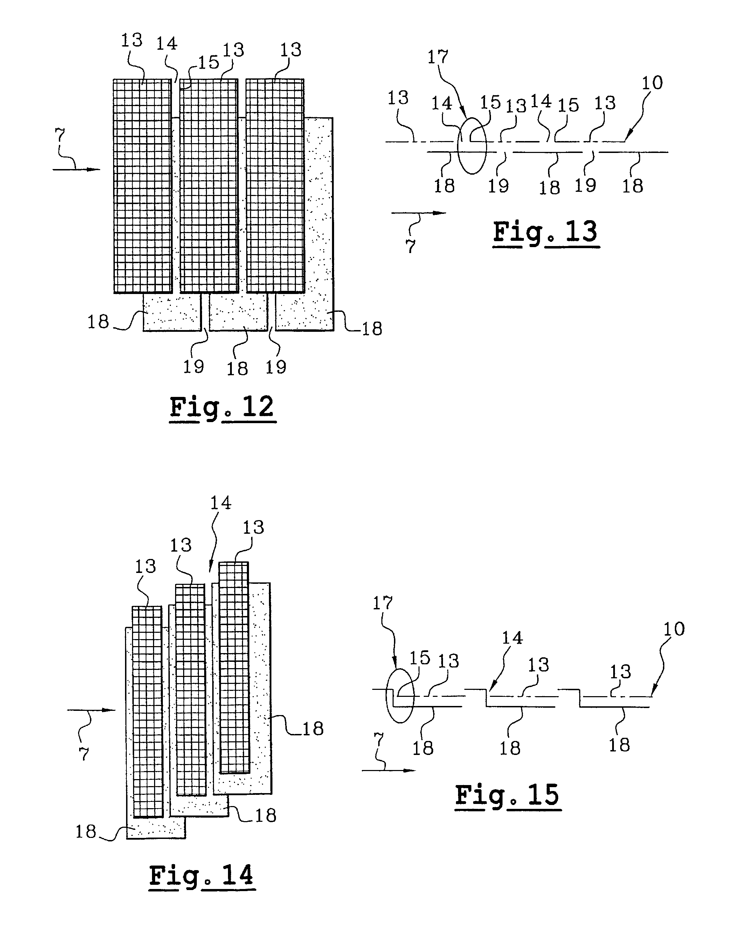

Les figures 12 et 13 illustrent un autre mode de mise en oeuvre dans lequel la couche acoustique 10 est analogue à celle des exemples précédents, mais les fils (16, 16', 16") sont remplacés par des bandes 18 de tôle perforée provenant d'une structure en forme de bande déposée par banderolage sur le moule, avant la dépose des bandes 13 poreuses.

Les bandes 18 sont enroulées en hélice avec un intervalle 19 entre elles et de façon à chevaucher les intervalles 14 de la couche 10.

Ainsi, la couche 10 peut jouer son rôle acoustique, cependant que les bandes 18 participent au renfort structural du panneau.

Pour assurer en 17 la solidarisation entre la bordure d'attaque (15) de chaque bande 13 avec la partie de tôle 18 en regard, on utilise divers moyens selon la nature des couches 10 et 18.

La couche 10 peut être un tissu métallique ou un tissu de fibres pré-imprégnées d'une résine époxy ou thermoplastique.

La tôle des bandes 18 est une feuille métallique, d'aluminium, de titane ou autre matériau par exemple, ou une tôle en matériau composite constituée par exemple d'un tissu de fibres pré-imprégnées d'une résine thermodurcissable ou thermoplastique.

Si les deux couches (10, 18) sont des tissus de fibres pré-imprégnées de résine, la solidarisation telle qu'en 17 des bordures des bandes 13 avec les tôles en regard 18 se fait par chauffage ultérieur de la résine comme précédemment.

Si la tôle (18) est métallique, la solidarisation en 17 se fera soit à l'aide de la résine de la couche 10, soit à l'aide de cette dernière et d'une colle thermofusible préalablement déposée sur ladite tôle métallique, soit à l'aide de cette seule colle si la couche 10 est un tissu métallique.

Les figures 14 et 15 illustrent une variante du procédé selon les figures 12, 13 dans laquelle les bandes de tôle 18 sont placées en léger chevauchement mutuel, assurant ainsi un total recouvrement des bandes 13 sous-jacentes qui, elles, ont une largeur sensiblement inférieures et sont placées en regard de la zone centrale des tôles 18, avec un intervalle 14 entre bandes 13 important en regard de la zone de chevauchement des tôles 18.

La couche d'amortissement acoustique 10 joue grâce aux trous des tôles 18 son rôle acoustique, cependant que les tôles 18 jouent leur rôle structural et les bordures des bandes 13 sont, telles qu'en 17, parfaitement plaquées contre l'âme alvéolaire (non représentée) grâce à la résine et éventuellement la colle des tôles 18, chauffées ultérieurement comme dans l'exemple précédent.

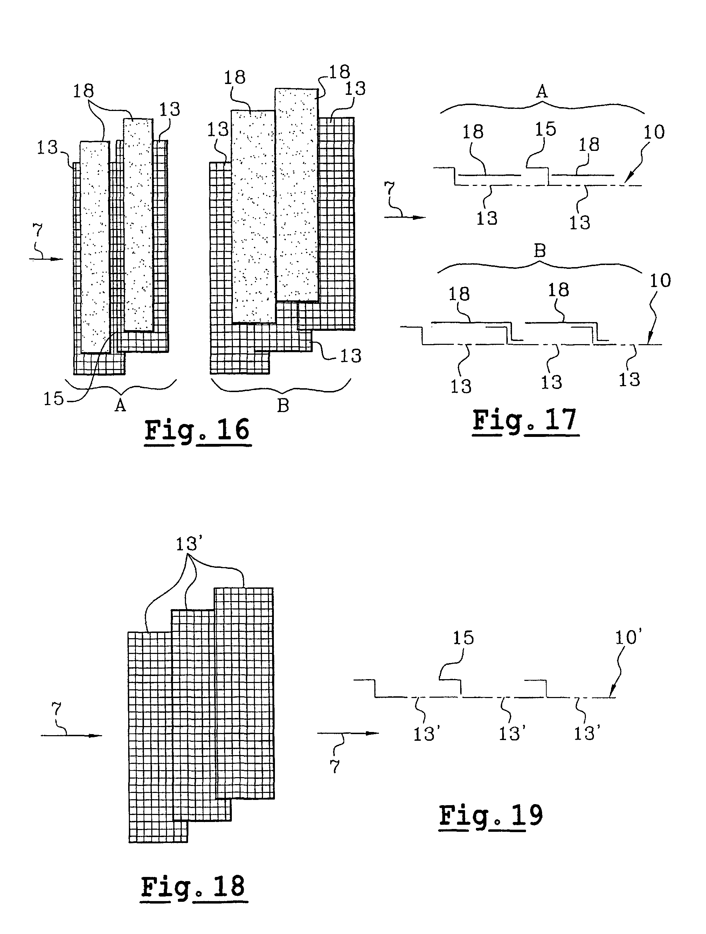

Les figures 16 et 17 illustrent deux variantes de l'exemple précédent, consistant en une inversion de la position mutuelle des couches respectivement poreuse 10 et métallique 18.

Dans la variante A, l'agencement est identique à celui des figures 14, 15 et simplement inversé, les bandes de structure poreuse 13 étant en léger chevauchement mutuel, les bords d'attaque 15 n'étant pas en contact avec l'écoulement aérodynamique 7.

La solidarisation des parties en recouvrement des bandes 13 est assurée par la seule résine du tissu des bandes qui est chauffée ultérieurement.

Dans la variante B, l'agencement est semblable à celui de la variante A excepté que les tôles 18 sont plus larges et sont placées à cheval sur les zones de chevauchement des bandes poreuses 13, renforçant ainsi la zone des bordures des bandes 13.

Enfin, les figures 18 et 19 illustrent encore un autre mode de mise en oeuvre dans lequel les fonctions d'amortissement acoustique et structural sont assurées par une couche unique (10') formée de bandes 13' en léger recouvrement mutuel.

Les bandes 13' sont placées par banderolage à partir d'un matériau en bande constitué d'un tissu formé de brins ou fils d'un diamètre suffisant pour donner au tissu une bonne résistance aux efforts couplée à un bon amortissement acoustique. Le tissu est par exemple constitué de fibres de carbone, de verre ou de "Kevlar", pré-imprégnées d'une résine thermodurcissable ou thermoplastique qui assurera, par chauffage, l'adhésion des zones de tissu en recouvrement des bandes 13', protégeant ainsi les bords dits d'attaque 15 qui sont, eux, recouverts par la bande 13' adjacente.

Dans les divers modes de réalisation décrits ci-dessus, les épaisseurs des couches des matériaux utilisés étant faibles, même dans les cas de superpositions partielles de couches, ne génèrent pas de désaffleurements aérodynamiques, causes de perturbation aérodynamique. Ainsi, l'homogénéité aérodynamique et acoustique est totale sur toute la paroi interne du panneau annulaire final.

Il est à noter que la couche structurale (fils 16, 16' 16" ; tôles 18) peut être déposée par drapage.

Dans tous les cas où la couche structurale est déposée, comme la couche d'amortissement acoustique, par banderolage, il est important de synchroniser les déposes de ces deux couches afin que les bordures des couches acoustiques soient protégées par une bande de couche structurale. Le pas réglable de dépose de la couche structurale permet de maîtriser le taux de surface ouverte de la couche d'amortissement acoustique.

Enfin, l'invention n'est évidemment pas limitée aux modes de réalisation représentés et décrits ci-dessus, mais en couvre au contraire toutes les variantes notamment en ce qui concerne la nature de la couche d'amortissement acoustique, la nature de la couche structurale et le mode de placement des fils ou bandes de la couche structurale vis-à-vis des bandes de la couche d'amortissement acoustique, ainsi que l'ordre de mise en place des différentes couches constitutives du panneau.

C'est ainsi que dans le cas de panneaux non-annulaires, concaves ou convexes, le procédé de l'invention permet la réalisation simultanée de plusieurs panneaux à partir d'un même moule sur lequel sont banderolées ou drapées les diverses couches, à savoir la couche poreuse telle que 10, la couche structurale telle que 16 associée à la couche poreuse 10, la couche alvéolaire 11 et la couche formant réflecteur total 12, l'ordre de dépose successive des couches sur le moule permettant d'obtenir des panneaux avec une couche poreuse protégée concave ou convexe selon les applications envisagées. Ces panneaux peuvent comporter des parties planes ou complexes. On peut ainsi réaliser par exemple des panneaux constituant des portes d'inverseurs de poussée.

Suivant une variante, il est également possible de fabriquer un panneau en deux temps en commençant à banderoler ou draper sur un moule le réflecteur total 12 puits l'âme à structure alvéolaire 11, puis en un second temps, et après cuisson en autoclave et retrait du moule, en banderolant ou drappant la couche poreuse 10 et les fils pré-imprégnés 16 sur l'âme à structure alvéolaire 11 conformément au procédé de l'invention.

Par ailleurs, dans les modes de mise en oeuvre illustrés par les figures 4 à 11, on peut augmenter la tenue structurale du panneau en déposant, par banderolage ou bobinage, des fils 16, 16', 16" supplémentaires formant un angle non nul avec les autres fils 16, 16', 16", ces fils supplémentaires étant placés de part et/ou d'autre de la couche poreuse 10.

## Revendications

1. Procédé de fabrication d'un panneau à couche d'amortissement acoustique protégée, comprenant au moins une âme alvéolaire (11) flanquée, d'une part, d'une couche d'amortissement acoustique poreuse (10) et, d'autre part, d'un réflecteur acoustique total (12), dans lequel au moins ladite couche poreuse (10) est mise en place par banderolage ou drapage, ladite couche poreuse (10) étant constituée de bandes parallèles, **caractérisé en ce qu'**on positionne les bords (15) des bandes (13) de la couche poreuse (10) en regard d'une bande (16, 18) déposée par banderolage ou drapage et contenant un matériau thermoplastique, thermodurcissable ou thermofusible lequel par chauffage ultérieur, assure la solidarisation des bordures desdites bandes (13) avec la bande adjacente (16, 18).

2. Procédé suivant la revendication 1, plus particulièrement destiné à la réalisation d'un panneau d'un seul bloc, sans éclisse, de forme générale annulaire, **caractérisé en ce que** ladite couche poreuse (10) et ladite bande (16, 18) contenant un matériau thermoplastique, thermodurcissable ou thermofusible, sont banderolées ou drapées sur un moule conforme au profil du panneau à obtenir, la structure alvéolaire (11) et le réflecteur total (12) étant ensuite mis en place également par banderolage ou drapage.

3. Procédé suivant la revendication 1 ou 2, **caractérisé en ce que** ladite bande contenant un matériau thermoplastique, thermodurcissable ou thermofusible est constituée de fils (16, 16', 16") pré-imprégnés d'une résine thermodurcissable ou thermoplastique, ladite bande constituant une couche structurale associée à la couche acoustique poreuse (10).

4. Procédé suivant la revendication 3, **caractérisé en ce que** les bandes (13) de la couche poreuse (10) sont déposées de manière non jointive et les fils (16, 16', 16") sont déposés en recouvrement des intervalles entre lesdites bandes (13).

5. Procédé suivant la revendication 3 ou 4, **caractérisé en ce que** lesdits fils (16) sont banderolés sur la couche poreuse (10), en sorte d'être pris en sandwich entre cette dernière et l'âme alvéolaire (11) déposée ensuite notamment par banderolage d'une structure en nid d'abeilles en forme de bande.

6. Procédé suivant la revendication 5, **caractérisé en ce que** les enroulements des fils (16) sont à distance les uns des autres et uniquement en regard et en chevauchement des intervalles (14) entres les bandes (13) de la couche poreuse (10).

7. Procédé suivant la revendication 3 ou 4, **caractérisé en ce que** lesdits fils (16, 16', 16") sont banderolés en premier sur le moule de façon à se trouver au moins en regard et en chevauchement des intervalles (14) entre les bandes (13) de la couche poreuse (10) qui est banderolée en deuxième temps.

8. Procédé suivant la revendication 3 ou 4, **caractérisé en ce que** lesdits fils (16) sont placés de part et d'autre de la couche poreuse (10) et en sorte de recouvrir au moins les intervalles (14) entre bandes (13) de ladite couche poreuse.

9. Procédé suivant l'une quelconque des revendications 3 à 8, **caractérisé en ce que** les fils (16,16',16") sont sous forme d'un ensemble de section carrée, ronde ou rectangulaire composé de fils, bandes de fils, mèches, tresses ou brins de fils, notamment de carbone, de verre ou de "Kevlar".

10. Procédé suivant la revendication 1 ou 2, **caractérisé en ce que** ladite bande contenant un matériau thermoplastique, thermodurcissable ou thermofusible est une bande de tôle perforée (18).

11. Procédé suivant la revendication 10, **caractérisé en ce que** la tôle perforée (18) est choisie dans le groupe comprenant les tôles métalliques et les tôles en matériau composite constituées d'un tissu de fibres pré-imprégnées d'une résine thermodurcissable ou thermoplastique.

12. Procédé suivant la revendication 11, **caractérisé en ce que** la tôle perforée (18) est enduite d'une colle thermofusible.

13. Procédé suivant la revendication 11 ou 12, **caractérisé en ce que** les bandes de tôle perforée (18) ont une largeur égale ou inférieure à celle des bandes (13) de la couche poreuse (10) et sont placées en premier sur le moule avec un intervalle (19) entre deux bandes successives, puis la couche poreuse (10) est déposée en bandes (13) disposées en regard desdits intervalles (19) entre bandes de tôle (18).

14. Procédé suivant la revendication 11 ou 12, **caractérisé en ce que** les bandes de tôle perforée (18) ont une largeur sensiblement supérieure à celle des bandes (13) de la couche poreuse (10) et sont placées en premier sur le moule avec un léger recouvrement partiel entre bandes, puis la couche poreuse (10) est déposée en sorte notamment d'aligner chaque bande poreuse (13) avec une bande de tôle (18), les enroulements de la couche poreuse (10) n'étant pas jointifs.

15. Procédé suivant la revendication 11 ou 12, **caractérisé en ce que** les bandes de tôle perforée (18) ont une largeur inférieure à celle des bandes (13) de la couche poreuse (10) qui est déposée en premier sur le moule, de façon que les enroulements se recouvrent légèrement, puis les bandes de tôle (18) sont placées en regard ou non des zones de chevauchements des bandes (13) de la couche poreuse (10), ces bandes (13) n'étant pas jointives.

16. Procédé suivant la revendication 1 ou 2, **caractérisé en ce que** ladite bande contenant un matériau thermoplastique, thermodurcissable ou thermofusible est constituée par la couche poreuse (10) elle-même qui est formée d'un tissu (13') de fils pré-imprégnés d'une résine thermodurcissable ou thermoplastique, ledit tissu (13') étant déposé de façon à former des bandes ou enroulements à léger recouvrement mutuel.

17. Procédé suivant la revendication 1 **caractérisé en ce qu'**on banderole ou drape sur un moule le réflecteur total (12), puis l'âme à structure alvéolaire (11), ensuite, après cuisson en autoclave et retrait du moule, on banderole ou drape sur l'âme à structure alvéolaire (11) la couche poreuse (10) et des fils (16, 16', 16") pré-imprégnés d'une résine thermodurcissable ou thermoplastique constituant ladite bande apte à assurer la solidarisation des bordures des bandes de la couche poreuse (10).

18. Procédé suivant l'une des revendications 3 à 9, **caractérisé en ce qu'**en vue d'augmenter la tenue structurale du panneau, on dépose, par banderolage ou bobinage, des fils (16, 16', 16") supplémentaires formant un angle non nul avec les autres fils (16, 16', 16") et placés de parts et/ou d'autre de la couche poreuse 10.

19. Panneau d'atténuation acoustique susceptible d'être obtenu par le procédé selon l'une quelconque des revendications 1 à 18.

## Patentansprüche

1. Verfahren zur Herstellung einer Platte mit geschützter Schalldämmschicht, mit wenigstens einem Wabenkern (11), der einerseits von einer porösen Schalldämmschicht (10) und andererseits von einem Schalltotalreflektor (12) flankiert ist, wovon wenigstens die poröse Schicht (10) durch Banderolieren oder Drapieren angeordnet wird, wobei die poröse Schicht (10) aus parallelen Bändern gebildet ist, **dadurch gekennzeichnet, dass** die Ränder (15) der Bänder (13) der porösen Schicht (10) gegenüber einem Band (16, 18) angeordnet werden, das durch Banderolieren oder Drapieren abgelegt worden ist und ein wärmeformbares, wärmehärtbares oder wärmeschmelzbares Material umfaßt, mittels dessen eine spätere Erwärmung die feste Verbindung der Ränder dieser Bänder (13) mit dem angrenzenden Band (16, 18) gewährleistet.

2. Verfahren nach Anspruch 1, das insbesondere für die Herstellung einer laschenfreien Monoblockplatte mit einer im Allgemeinen ringförmigen Form bestimmt ist, **dadurch gekennzeichnet, dass** die poröse Schicht (10) und das Band (16, 18), das ein wärmeformbares, wärmehärtbares oder wärmeschmelzbares Material umfaßt, auf eine Form mit dem Profil einer zu erhaltenden Platte banderoliert oder drapiert werden, wobei die Wabenstruktur (11) und der Totalreflektor (12) anschließend ebenfalls durch Banderolieren oder Drapieren angeordnet werden.

3. Verfahren nach Anspruch 1 oder 2, **dadurch gekennzeichnet, dass** das Band, das ein wärmeformbares, wärmehärtbares oder wärmeschmelzbares Material umfaßt, aus Fäden (16, 16', 16") gebildet ist, die mit einem wärmehärtbaren oder wärmeformbaren Harz vorimprägniert sind, wobei das Band eine Strukturschicht bildet, die der porösen Schallschicht (10) zugeordnet ist.

4. Verfahren nach Anspruch 3, **dadurch gekennzeichnet, dass** die Bände (13) der porösen Schicht (10) in nicht verbundener Weise abgelegt sind und die Fäden (16, 16', 16") so abgelegt sind, dass sie die Zwischenräume zwischen den Bändern (13) bedecken.

5. Verfahren nach Anspruch 3 oder 4, **dadurch gekennzeichnet, dass** die Fäden (16) auf die poröse Schicht (10) in der Weise banderoliert werden, dass sie sandwichartig zwischen dieser Letzteren und dem Wabenkern (11) angeordnet sind, der anschließend insbesondere durch Banderolieren einer Wabenstruktur in Form eines Bandes abgelegt wird.

6. Verfahren nach Anspruch 5, **dadurch gekennzeichnet, dass** die Wicklungen der Fäden (16) voneinander beabstandet sind und ausschließlich gegenüber den Zwischenräumen (14) zwischen den Bändern (13) der porösen Schicht (10) so angeordnet sind, dass sie mit diesen überlappen.

7. Verfahren nach Anspruch 3 oder 4, **dadurch gekennzeichnet, dass** zunächst die Fäden (16, 16', 16") auf die Form in der Weise banderoliert werden, dass sie zumindest gegenüber den Zwischenräumen (14) zwischen den Bändern (13) der porösen Schicht (10), die anschließend banderoliert wird, vorhanden sind.

8. Verfahren nach Anspruch 3 oder 4, **dadurch gekennzeichnet, dass** die Fäden (16) beiderseits der porösen Schicht (10) in der Weise angeordnet werden, dass sie zumindest die Zwischenräume (14) zwischen den Bändern (13) der porösen Schicht abdecken.

9. Verfahren nach einem der Ansprüche 3 bis 8, **dadurch gekennzeichnet, dass** die Fäden (16, 16', 16") in Form eines Bündels mit quadratischem, rundem oder rechteckigem Querschnitt vorliegen, das aus Fäden, Fadenbändern, Vorgarn, Geflechten oder Garnen, insbesondere aus Kohlenstoff, Glas oder "Kevlar", gebildet ist.

10. Verfahren nach Anspruch 1 oder 2, **dadurch gekennzeichnet, dass** das Band, das einen wärmeformbares, wärmehärtbares oder wärmeschmelzbares Material umfaßt, ein Lochplattenband (18) ist.

11. Verfahren nach Anspruch 10, **dadurch gekennzeichnet, dass** die Lochplatte (18) aus der Gruppe gewählt ist, die Metallbleche sowie Verbundwerkstoffplatten, die aus einem Gewebe aus mit einem wärmehärtbaren oder wärmeformbaren Harz vorimprägnierten Fasern gebildet sind, umfasst.

12. Verfahren nach Anspruch 11, **dadurch gekennzeichnet, dass** die Lochplatte (18) mit einem wärmeschmelzbaren Klebstoff eingehüllt ist.

13. Verfahren nach Anspruch 11 oder 12, **dadurch gekennzeichnet, dass** die Lochplattenbänder (18) eine Breite besitzen, die gleich der oder kleiner als jene der Bänder (13) der porösen Schicht (10) ist, und als erstes auf der Form mit einem Zwischenraum (19) zwischen zwei aufeinander folgenden Bändern angeordnet werden, woraufhin die poröse Schicht (10) in Bändern (13) so abgelegt wird, dass sich diese gegenüber den Zwischenräumen (19) zwischen den Plattenbändern (18) befinden.

14. Verfahren nach Anspruch 11 oder 12, **dadurch gekennzeichnet, dass** die Lochplattenbänder (18) eine Breite besitzen, die wesentlich größer als jene der Bänder (13) der porösen Schicht (10) ist, und als erstes auf der Form mit einer geringen Teilabdeckung zwischen Bändern angeordnet werden, woraufhin die poröse Schicht (10) insbesondere in der Weise abgelegt wird, dass jedes poröse Band (13) auf ein Plattenband (18) ausgerichtet ist, wobei die Wicklungen der porösen Schicht (10) nicht aneinander stoßen.

15. Verfahren nach Anspruch 11 oder 12, **dadurch gekennzeichnet, dass** die Lochplattenbänder (18) eine Breite besitzen, die kleiner als jene der Bänder (13) der porösen Schicht (10) ist, die als erstes auf der Form abgelegt werden, derart, dass die Wicklungen leicht überlappen, woraufhin die Plattenbänder (18) gegenüber oder nicht gegenüber den Überlappungszonen der Bänder (13) der porösen Schicht (10) angeordnet werden, wobei diese Bänder (13) nicht aneinander stoßen.

16. Verfahren nach Anspruch 1 oder 2, **dadurch gekennzeichnet, dass** das Band, das ein wärmeformbares, wärmehärtbares oder wärmeschmelzbares Material umfaßtaus der porösen Schicht (10) selbst gebildet ist, die aus einem Gewebe (13') aus Fäden gebildet ist, die mit einem wärmehärtbaren oder wärmeformbaren Harz vorimprägniert sind, wobei das Gewebe (13') in der Weise abgelegt ist, dass Bänder oder Wicklungen mit geringer gegenseitiger Überdeckung gebildet werden.

17. Verfahren nach Anspruch 1, **dadurch gekennzeichnet, dass** der Totalreflektor (12) und dann der Kern (11) mit Wabenstruktur auf eine Form banderoliert oder drapiert werden, woraufhin nach einem Erhitzen im Autoklaven und nach dem Entnehmen der Form auf dem Kern (11) mit Wabenstruktur die poröse Schicht (10) und die Fäden (16, 16', 16"), die mit einem wärmehärtbaren oder wärmeformbaren Harz vorimprägniert sind und das Band bilden, das die Befestigung der Ränder der Bänder der porösen Schicht (10) gewährleisten kann, banderoliert oder drapiert werden.

18. Verfahren nach einem der Ansprüche 3 bis 9, **dadurch gekennzeichnet, dass** zur Erhöhung der strukturellen Festigkeit der Platte zusätzliche Fäden (16, 16', 16") durch Banderolieren oder Wickeln abgelegt werden, wobei diese Fäden mit den anderen Fäden (16, 16', 16") einen von null verschiedenen Winkel bilden und auf der einen und/oder der anderen Seite der porösen Schicht (10) angeordnet werden.

19. Schalldämmplatte, die durch das Verfahren nach einem der Ansprüche 1 bis 18 erhalten werden kann.

## Claims

1. A method of manufacturing a panel with a protected acoustic damping layer, comprising at least one alveolar core (11) flanked on the one hand by a porous acoustic damping layer (10) and on the other hand by a total acoustic reflector (12), in which at least said porous layer (10) is put in place by hoop casing or draping, said porous layer being formed of parallel strips, **characterised in that** the edges (15) of the strips (13) of the porous layer (10) are positioned opposite a strip (16, 18) deposited by hoop casing or draping and containing a thermoplastic, thermosetting or hot-melt material which, by subsequent heating, provides the connection of the borders of said strips (13) with the adjacent strip (16, 18).

2. A method according to claim 1, more particularly intended for producing a panel in a single block, without fishplates, annular in shape overall, **characterised in that** said porous layer (10) and said strip (16, 18) containing a thermoplastic, thermosetting or hot-melt material are hoop cased or draped on a mould in accordance with the profile of the panel to be obtained, the alveolar structure (11) and the total reflector (12) then being put in place also by hoop casing or draping.

3. A method according to claim 1 or 2, **characterised in that** said strip containing a thermoplastic, thermosetting or hot-melt material is formed of fibres (16, 16', 16") pre-impregnated with a thermosetting or thermoplastic resin, said strip constituting a structural layer associated with the porous acoustic layer (10).

4. A method according to claim 3, **characterised in that** the strips (13) of the porous layer (10) are deposited non-contiguously and the fibres (16, 16', 16") are deposited so as to cover the gaps between said strips (13).

5. A method according to claim 3 or 4, **characterised in that** said threads (16) are hoop cased on the porous layer (10), so as to be sandwiched between the latter and the alveolar core (11) next deposited in particular by hoop casing a honeycomb structure in strip form.

6. A method according to claim 5, **characterised in that** the windings of the fibres (16) are at a distance from each other and solely facing and straddling the gaps (14) between the strips (13) of the porous layer (10).

7. A method according to claim 3 or 4, **characterised in that** said fibres (16, 16', 16") are first hoop cased on the mould so as to be situated at least facing and straddling the gaps (14) between the strips (13) of the porous layer (10) which is, secondly, hoop cased.

8. A method according to claim 3 or 4, **characterised in that** said fibres (16) are placed on each side of the porous layer (10) and so as to cover at least the gaps (14) between strips (13) of said porous layer.

9. A method according to any one of claims 3 to 8, **characterised in that** the fibres (16, 16', 16") are in the form of an assembly with a square, round or rectangular cross-section composed of fibres, strips of fibres, strands, braids or tufts of fibres, in particular carbon, glass or "Kevlar".

10. A method according to claim 1 or 2, **characterised in that** said strip containing a thermoplastic, thermosetting or hot-melt material is a strip of perforated sheet (18).

11. A method according to claim 10, **characterised in that** the perforated sheet (18) is chosen from the group comprising metallic sheets and sheets made from composite material formed of a fabric of fibres pre-impregnated with a thermosetting or thermoplastic resin.

12. A method according to claim 11, **characterised in that** the perforated sheet (18) is coated with a hot-melt adhesive.

13. A method according to claim 11 or 12, **characterised in that** the strips of the perforated sheet (18) have a width equal to or less than that of the strips (13) of the porous layer (10) and are first placed on the mould with a gap (19) between two successive strips, and then the porous layer (10) is deposited in strips (13) disposed opposite said gaps (19) between strips of sheet (18).

14. A method according to claim 11 or 12, **characterised in that** the strips of perforated sheet (18) have a width substantially greater than that of the strips (13) of the porous layer (10) and are first placed on the mould with a slight partial overlap between strips, and then the porous layer (10) is deposited so as to align in particular each porous strip (13) with a strip of sheet (18), the windings of the porous layer (10) not being contiguous.

15. A method according to claim 11 or 12, **characterised in that** the strips of perforated sheet (18) have a width less than that of the strips (13) of the porous layer (10) which is first deposited on the mould, such that the windings overlap slightly, and then the strips of sheet (18) are placed opposite or not the areas of overlap of the strips (13) of the porous layer (10), these strips (13) not being contiguous.

16. A method according to claim 1 or 2, **characterised in that** said strip containing a thermoplastic, thermosetting or hot-melt material is formed of the porous layer (10) itself which is formed of a fabric (13') of fibres pre-impregnated with a thermosetting or thermoplastic resin, said fabric (13') being deposited so as to form strips or winding with a slight mutual overlap.

17. A method according to claim 1, **characterised in that** the total reflector (12) and then the core with an alveolar structure (11) are hoop cased or draped on a mould and then, after curing in an autoclave and removal of the mould, there are hoop cased or draped on the cover with an alveolar structure (11) the porous layer (10) and fibres (16, 16', 16") pre-impregnated with a thermosetting or thermoplastic resin forming said strip able to provide the connection of the borders of the strips of the porous layer (10).

18. A method according to one of claims 3 to 9, **characterised in that**, with a view to increasing the structural strength of the panel, supplementary fibres (16, 16', 16") forming a non-zero angle with the other fibres (16, 16', 16") and placed on either or both sides of the porous layer (10) are deposited by hoop casing or winding.

19. An acoustic attenuation panel able to be obtained by the method according to any one of claims 1 to 18.
